# EUROPEAN PATENT SPECIFICATION

(11) **EP 2 908 619 B1**
(45) Date of publication and mention of the grant of the patent: **05.12.2018**
(21) Application number: 13780377.1
(22) Date of filing: 15.10.2013
(51) Int. Cl.: A01G 17/04

(54) **TREE ANCHORING APPARATUS, KIT AND METHOD**
BAUMVERANKERUNGSVORRICHTUNG, -KIT UND VERFAHREN
APPAREIL, KIT ET PROCÉDÉ D'ANCRAGE D'ARBRE

(30) Priority: 17.10.2012 GB 201218653
(43) Date of publication of application: 26.08.2015
(73) Proprietor: Platipus Anchors Holdings Limited, Redhill, Surrey RH1 4DP (GB)
(72) Inventor: AGG, Charles Simon James, Reigate Surrey RH2 8PY (GB); RUSSELL, Michael Hamilton, Burgess Hill RH15 9XS (GB)
(74) Representative: Boult Wade Tennant LLP
(86) International application number: PCT/GB2013/052683
(87) International publication number: WO 2014/060737

(56) References cited:
- EP-A1- 2 464 788
- GB-A- 2 274 764
- JP-A- H08 103 180
- JP-A- 2006 180 796
- US-A- 3 683 549
- US-A- 6 112 455
- US-A1- 2003 183 549

## Description

The present invention relates to tree anchoring apparatus, a tree anchoring kit and a method of anchoring of a tree.

The apparatus, kit and method of the invention are of particular use in anchoring a tree in shallow soil as part of a rooftop garden or use on a brownfield site and in urban environments, as will be further explained below.

When planting mature or semi-mature trees on rooftop gardens (or in brownfield sites or in urban environments, as described below), only shallow soil is available in which to locate the root ball of the trees. As such the tree requires support in addition to that of the weight of the soil upon the root ball to prevent it from falling over, e.g. when subject to wind loading. It is not permitted to anchor the root ball in any way that would penetrate the rooftop, since this comprises a water impermeable layer for protecting the inside of the building from water damage; this is also relevant for brownfield sites and for urban sites, as described below.

Similar restrictions occur on brownfield sites, which typically have an impermeable (gas tight) membrane separating the deep spoiled soil from the shallow upper layer of good soil. It is not permitted to penetrate such impermeable layers. Furthermore there may be services such as water pipes, gas pipes or electricity cables located below a barrier layer such as the impermeable membrane and the roots of the tree are to be prevented from reaching such services.

Therefore, when mature or semi-mature trees are transplanted to shallow ground, they are conventionally secured upright in their transplanted locations by firstly arranging weights, typically railway sleepers, kerb stones or path edging, below or around the intended location of the root ball of the tree and then tying to the weights a cable that is wrapped around the root ball. The mass of the weights is used to anchor the root ball.

Weights such as kerb stones, path edging or railways sleepers may be expensive, hard to store and transport, restrict the space available for the planting of trees, and increase the time taken to plant the trees. For roof top planting it is particularly inconvenient to transport heavy weights up to the top of a roof.

JP 2006 180796 A discloses a wooden underground mine-timbering for a transplanted tree disappearing with the lapse of time and allowing natural expansion of plant roots without giving a burden to the environment.

There is a need for a quick and cost effective method for anchoring a tree in shallow ground and cheap and lightweight apparatus that can be easily stored and transported.

A first aspect of the invention provides tree anchoring apparatus as defined by claim 1.

The invention provides in a second aspect a tree anchoring kit as defined in claim 12.

A third aspect of the invention provides a method of anchoring a tree as defined by claim 13.

Preferred examples of apparatus and methods according to the present invention will now be described with reference to the accompanying drawings in which:
Figure 1 is a diagram of a tree anchored by anchoring apparatus comprising anchor units as illustrated in Figures 2 to 9 arranged in a first arrangement;
Figure 2 is a plan top view of an anchor unit of the first embodiment of tree anchoring apparatus illustrated in Figure 1;
Figure 3 is a side view of the anchor unit of Figure 2;
Figure 4 is a cross-section through the anchor unit of Figure 2, taken along the line A - A of Figure 2;
Figure 5 is a cross-section through the anchor unit of Figure 2; taken along the line B - B of Figure 2;
Figure 6 is a detail view of a first part of the anchor unit of Figure 2;
Figure 7 is a detail view of a second part of the anchor unit of Figure 3;
Figure 8 is a cross-section along the line CL - CL of Figures 2 and 9;
Figure 9 is an underneath plan view of the anchor unit of Figure 2;
Figure 10 is a schematic view of a first stacked arrangement of the anchor units of Figures 2 to 9;
Figure 11 is a schematic view of a second stacked arrangement of the anchor units of Figures 2 to 9;
Figure 12a is a schematic side view in part cross-section of a tree anchored by anchoring apparatus comprising anchor units as illustrated in Figures 2 to 11 arranged in a second arrangement and Figure 12b is a schematic top plan view of the second arrangement of anchor units;
Figure 13 is a schematic side view in part cross-section of a tree anchored by anchoring apparatus comprising anchor units as illustrated in Figures 2 to 11 arranged in a third arrangement and Figure 13b is a schematic top plan view of the third arrangement of anchor units;
Figure 14a is a plan view of an array of the anchor units of Figures 2 to 9, interconnected in a line;
Figure 14b is a schematic top plan view of three of the arrays of Figure 14a arranged around a tree, supporting the tree;
Figure 15 depicts an array of the anchor units of Figures 2 to 9, interconnected to form a rectangular raft; and
Figure 16 depicts an array of the anchor units of Figures 2 to 9, interconnected with a one anchor unit bridging two other anchor units;
Figure 17 depicts an array of the anchor units of Figures 2 to 9, interconnected to form a square raft;
Figure 18 depicts an array of the anchor units of Figures 2 to 9, interconnected to form a square raft;

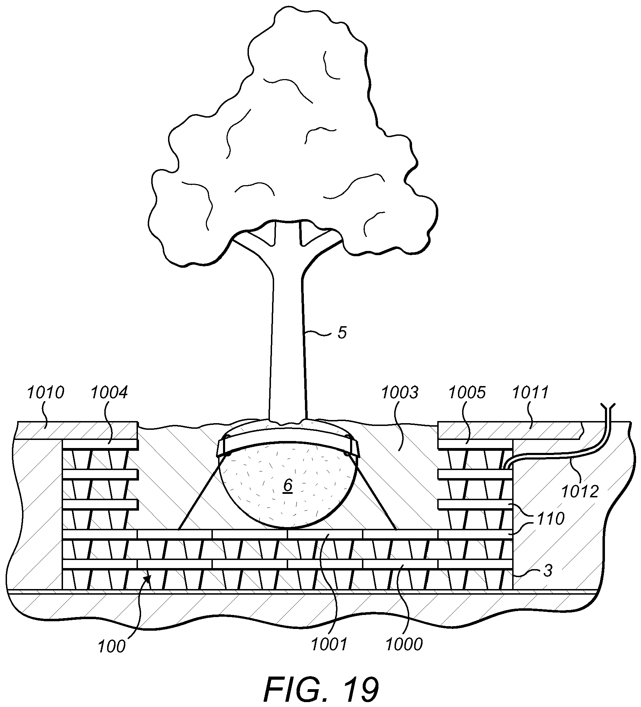

Figure 19 is a diagram of a tree anchored by anchoring apparatus comprising the anchor units of Figures 2 to 9 arranged in a fourth arrangement;
Figures 20a to 20c show a cable with an end fitting enabling the cable to be secured to an anchor point of an anchor unit and a method of securing the cable to the anchor point; and

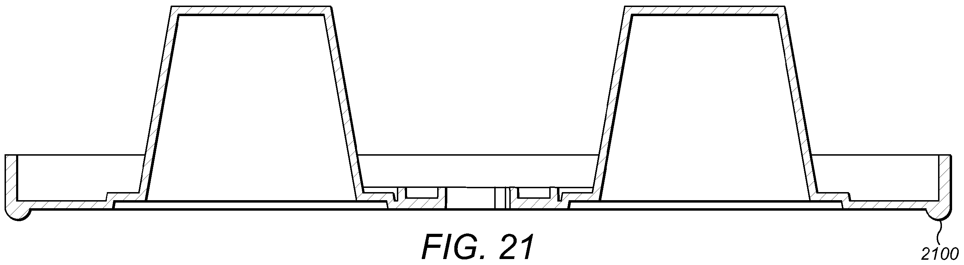

Figure 21 shows a variant of the anchor unit of Figures 2 to 9.

The following describes preferred embodiments of the invention.

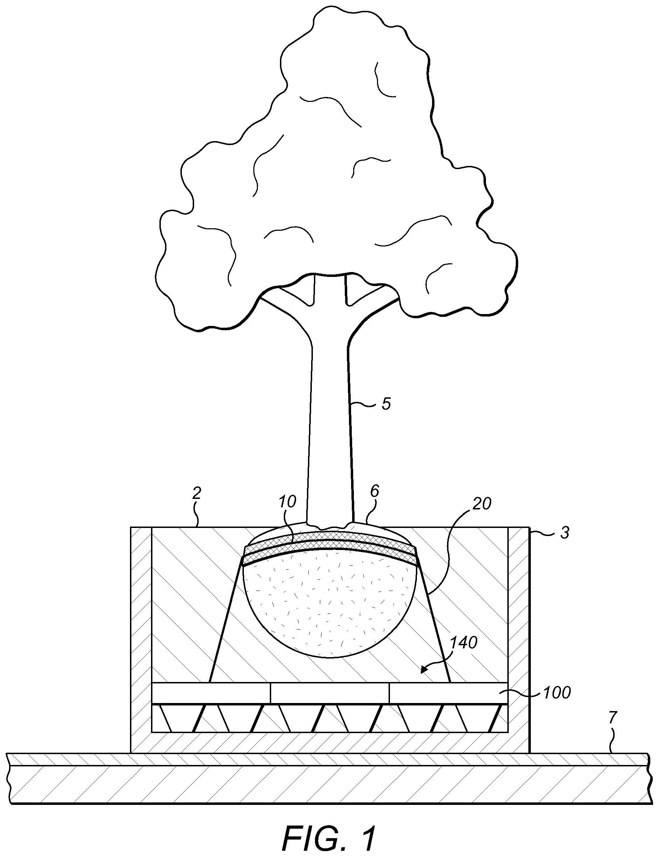

Figure 1 shows a tree 5 secured in a pot 3 with only a shallow covering of soil 2. Since the pot rests upon a rooftop 7, it is not possible to secure the tree 5 to the rooftop itself, since it is not permitted to use penetrative fixings which would penetrate roof 7 and provide a passage for water.

The tree 5 has a root ball 6 and is anchored in place by tree anchoring apparatus comprising a cable or strap 10, 20, which is secured to tree anchoring apparatus 100.

Suitable means for strapping the root ball 6 of the tree 5 with a cable or strap 10, 20 and then tensioning the same with a suitable tensioner, may be found in WO 2010/146336.

The tree anchoring apparatus 100 is located in the base of the pot 3, and an overburden of soil 2 is supported by a support surface 140 provided by the apparatus 100. The soil also surrounds the root ball 6.

Unlike the weights used in the prior art method of anchoring a tree, the tree anchoring apparatus 100 of Figure 1 is lightweight. Rather than relying on its mass to anchor the tree 5 in place, the tree anchoring apparatus 100 provides a relatively large upper surface area 140 supporting an overburden of soil 2, sufficient that the weight of the soil overburden anchors the tree rather than the weight of the tree anchoring apparatus 100 itself. Thus, the anchoring of the tree 5 in Figure 1 does not require the transportation or handling of cumbersome heavy weights, such as railway sleepers kerb stones, path edging. Instead, a lightweight and easy to assemble tree anchoring apparatus 100 is arranged within the pot 3.

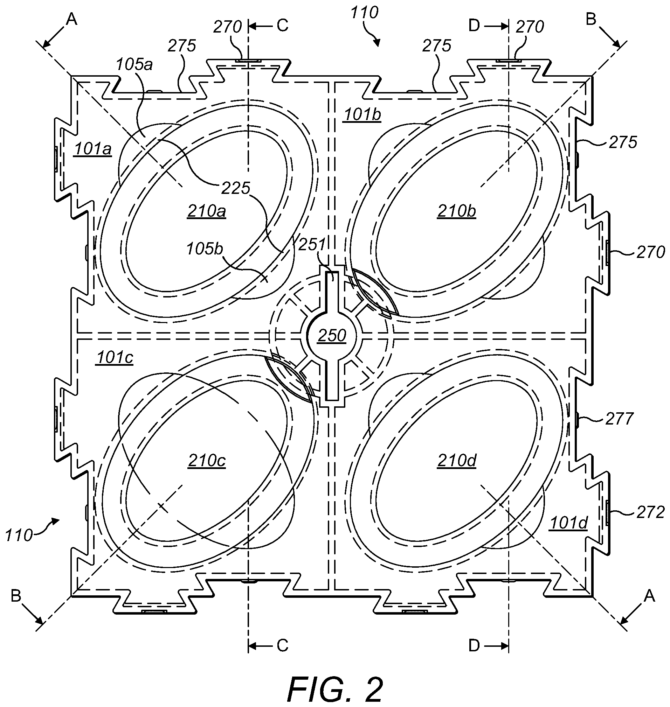

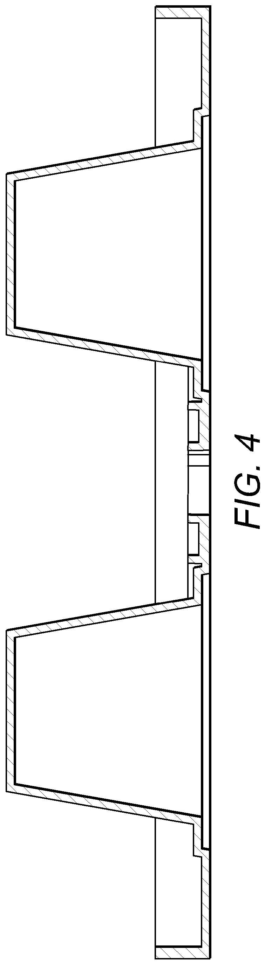

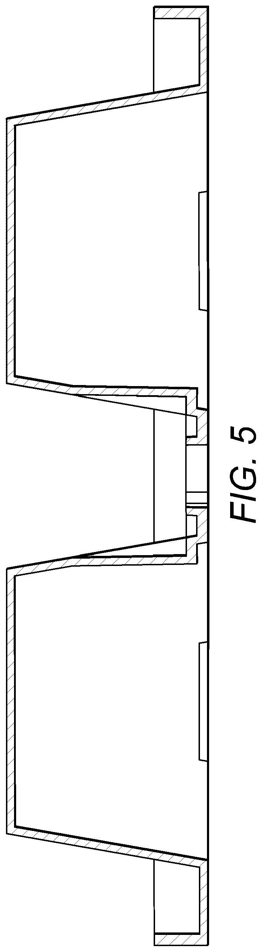

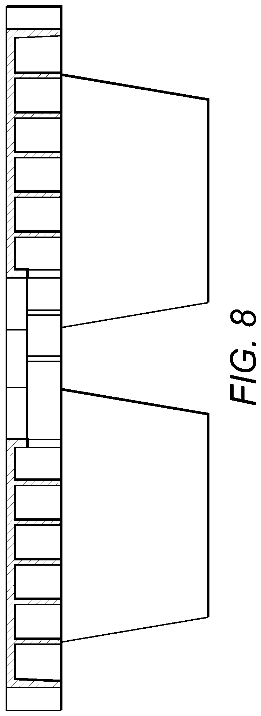

Figures 2 to 9 show a first embodiment of an anchor unit 110 for use in anchoring apparatus 100 according to the invention. As can be seen in these figures, the anchor unit 110 is formed to provide a planar upper surface 140 (see Figure 2) for supporting an overburden of soil thereon. The anchoring unit is formed with four identical sections 101a, 101b, 101c, 101d. In the illustrated preferred embodiment, a plurality of cups 210a, 210b, 210c, 210d, extend downwardly from the upper surface, each cup 210a, 210b, 210c, 210d provided in the respective section 101a, 101b, 101c, 101d of the anchor unit 110. The anchor unit 110 is preferably formed from a single piece of material by a process such as injection moulding; the anchor unit can be formed from recycled plastics, HDPE and/or polycarbonate.

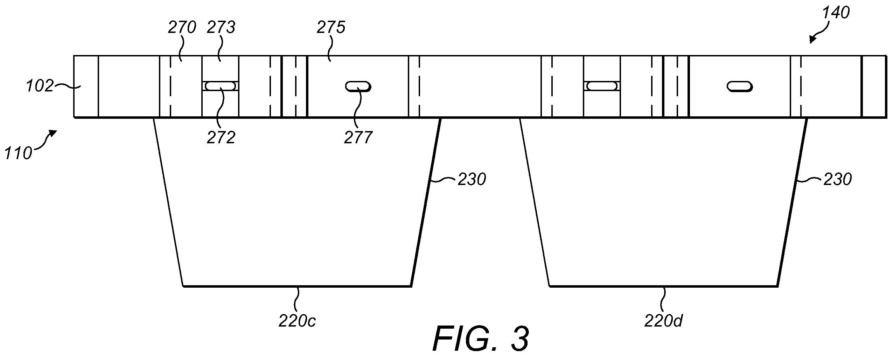

Each cup 210a, 210b, 210c, 210d has a substantially flat base 220a, 210b, 210c, 210d (see Figure 3) and a side wall 230 extending from its base 220 to where the cup meets with a planar layer 102, the top of which provides the planar upper support surface 140.

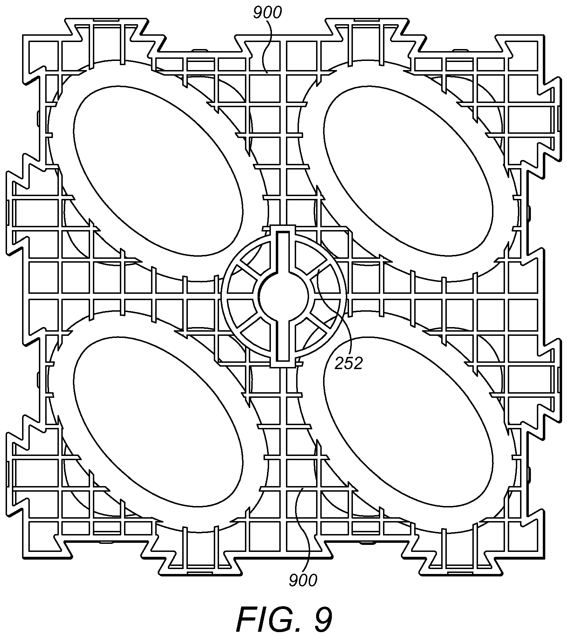

Raised ribs 900 can be formed on the lower part of planar layer 240 between the cups 210 to enhance the rigidity of the tray 200, as seen in Figure 9.

In the preferred embodiment each cup 210a, 210b, 210c, 210d has, in a plane perpendicular to the longitudinal axis of the cup 210a, 210b, 210c, 210d, a cross-sectional shape that is not axially symmetric. When a first anchor unit 100 is placed upon a second identical anchor unit in the same orientation, the cups 210a, 210b, 210c, 210d of the two units 100 will nest, with the upper surfaces 240 of the two units 100 relatively close together. In contrast, when the first unit 100 is placed upon a second identical unit 100 in a different orientation (e.g. when the unit is rotated through 90° or 270° with respect to the second unit), the first unit 100 will sit upon the second unit 201b such that the upper surfaces 240 are spaced apart by a larger distance. The illustrated cups 210a 210b, 210c, 210d of Figures 2 to 9 have cross-sections perpendicular to the longitudinal axis of the cups which are elliptical. The major axes of the cups 210a, 210b, 210c, 210d are parallel with each other.

It is preferable that each anchor unit has a square array of cups 210a, 210b, 210c, 210d (i.e. having the same number of cups 210 along its length as across its width).

In the illustrated preferred embodiment, a pair of recesses e.g. 105a, 105b are formed in the upper surface 240 extending radially outwardly from each cup, e.g. 210a. The pair of recesses 105a, 105b together form a seat, e.g. 225, arranged to receive the flat base 220 of another cup e.g. 210b, 210c, 210d. The seats 225 each have a shape matching the shape of the flat bases 220c of the cups e.g. 210c. In plan view, the geometric centre of the seat 225 coincides with the geometric centre of the cross-section of the cup 210. Thus, the flat bases e.g. 220c, 220d of the cups e.g. 210c, 210d may rest within the seats 225 of other anchor units . In this way, it is possible to stack units 110 of the preferred embodiment by alternating the orientation of neighbouring units 100.

Each anchor unit 110 is made moulded from lightweight, strong and rigid material. Preferably, the anchor unit would be moulded in a recycled plastic, from HDPE or from Polycarbonate.

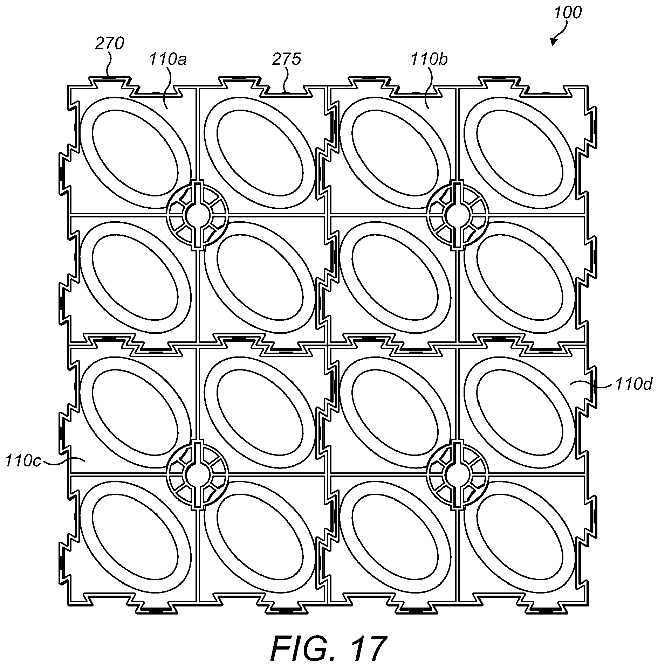

A method of anchoring a tree comprises connecting together a plurality of anchor units in situ to form a layer at the bottom of a pot 3 or a pit dug into the ground (if a pot 3 is not required); see Figures 1 and 17.

The root ball 6 of the tree 5 can be placed onto tree anchoring apparatus 100 comprising a layer of interconnected anchor units 110, either directly, or after a layer of soil 2 has been deposited, as shown in Figure 1. The soil 2 can act to raise the height of the tree 5 to a desirable level. Alternatively, the tree anchoring apparatus 100 can comprise multiple layers of interlocked anchor units 110 as shown in Figure 17, which can be used to alter the height of the tree 5, as described in more detail below.

Cables and/or straps 10, 20 are arranged on the top surface of the root ball 6 and surrounding the trunk of the tree 5. These cables or straps 10, 20 are attached to the tree anchoring apparatus 100 at anchor points 150 of the anchor units 110. Soil 2 is then deposited around the root ball 6 and on top of the layer(s) of interconnected anchor units.

The larger the soil supporting surface provided by the interconnected anchor units 110 of the tree anchoring apparatus 100, then the less likely are the interconnected anchor units are to be pulled through the soil by loading on the tree 5.

When an upward force is applied to interconnected anchor units 110 then the weight of an overburden of soil above the anchor units 110 prevents the anchor units from lifting. The interconnected anchor units share the loading among themselves.

It is necessary to compact the soil 2 around the root ball 6 to achieve a firm support for the root ball.

As can be seen in the Figures 1 and 17, the tree anchoring apparatus 100 is formed as a generally planar support surface in which are formed the plurality of cups 210a, 210b, 210c, 210d. When the anchor units 110 are interconnected then it is preferred that the areas of the open mouths of the cups is greater than the area of the surrounding planar surface. Advantageously, the cups 210a, 210b, 210c, 210d retain soil 2 in a manner which is advantageous to the interaction of the interlocked anchor units 110 with the soil. The cups also act to retain water near to the root ball 6 after watering of the tree 5, to irrigate the root ball 6. The roots of the tree 5 can grow down into the cups. The depths of the cups 210a, 210b, 210c, 210d also serves to provide the anchor units 110 with rigidity, i.e. a resistance to bending.

In preferred embodiments, the side wall 230 of each cup 110a, 110b, 110c, 110d is tapered, so that the cups 210a, 210b, 210c, 210d narrow towards their bases 120 (i.e. away from the open mouths of the cups). The angle of the side wall 230 determines the slope of the frustum of soil 2 overburden supported by the cups 210a, 210b, 210c, 210d. Preferably, the side wall 230 would be at an angle of 90° to 100°, e.g. 95°, to the longitudinal axis of the cup 210a, 210b, 210c, 210d, (which, in the first embodiment coincides with the axis of rotational symmetry of the cup). In other words, the side wall 230 would be at an angle of 95° to the vertical direction when the anchor unit 110 is laid on flat ground.

Advantageously, when an upward force is applied to an anchor unit 110 having tapered cups 210a, 210b, 210c, 210d, (such as that shown in Figure 3) a larger volume of overburden of soil 2 acts to prevent movement of the tray 100 than if the anchor units 100 had a simple planar support surface for the overburden.

The cup portions 210a, 210b, 210c, 210d of the tray 100 of Figures 2 to 4 have an elliptical cross-section perpendicular to the longitudinal axis of the cup portion 110. However, any shape can be used, such as a circular cross-section, an hexagonal cross-section, or a rectangular cross-section.

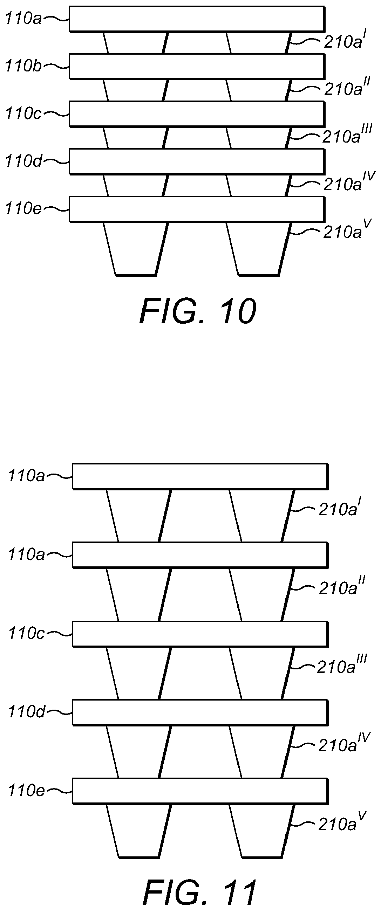

Figure 10 shows a plurality of anchor units 100a, 100b, 100c, 100d, stacked in a first arrangement. With each anchor unit aligned in a first orientation to its neighbours it is possible to stack a plurality of anchor units 100a, 100b, 100c, 100d in a nested fashion so that each cup 210a, 210b, 210c, 210d of one anchor unit sits within a corresponding cup 210a, 210b, 210c, 210d of another anchor unit. Therefore, the anchor units can be advantageously stacked in a compact form, as shown in Figure 10, allowing easy storage and transportation.

Figure 11 shows a plurality of anchor units 100 stacked in a second arrangement. As briefly mentioned above, and as shown in Figure 17, it is sometimes preferred to raise the height of a tree 5 to be planted above the level of the base of a pot 3 or a pit in the ground that is intended to house the root ball 6. As can be seen in Figure 11, by stacking the anchor units 110a, 110b, 110c, 110d in a second orientation relative to each other, it is possible to stack the anchor units 101a, 101b, 101c, 101d so that the base 120 of a cup 201a, 201b, 201c, 201d of a first anchor unit, e.g. 110a, is located in the recess 225 (see Figure 2) of a second anchor unit e.g. 110b,with the upper support surfaces of the stacked anchor units 110a, 110b, 110c, 110d spaced apart by the cups e.g.; 210aI, 210aII, 210aIII, 210aIV. Therefore, the anchor units 110a, 110b, 110c, 110d can be advantageously stacked in a way which allows a root ball 6 to be supported thereon at a raised level as compared with the surface on which the stacked anchor units rest; see Figure 17 in which a first layer 1000 of stacked anchor units 110a, 110b, 110c, 110d cover the bottom of pot or pit and a second layer 1001 of interlocked anchor units 110a, 110b, 110c, 110d are stacked on the first layer 1000 in the second orientation, supporting the root ball and the overburden of soil 1003.

Also shown in Figure 17 are stacks 1004 and 1005 of anchor units 110 which extend alongside root ball 6 and in which the anchor units 110 are spaced apart since each anchor unit 110 is in the second orientation relative to the anchor unit 110 stacked thereon. The stack 1004 supports an edge of a paving slab 1010 and the stack 1005 supports an edge of a paving slab 1011. A conduit 1012 allows water to be supplied to the stacked anchor units for storage in the cups of the anchor units and to irrigate the tree 5.

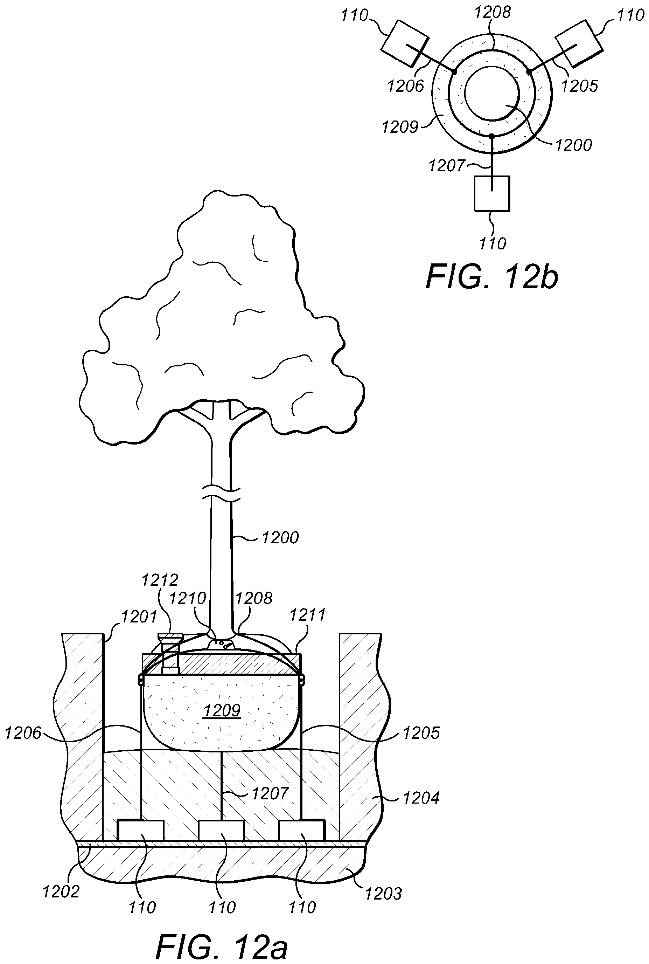

For small trees such as tree 1200 in Figures 12a and 12b, the anchor units 110 can be used as illustrated in the Figures. In the Figure 12a the tree 1200 is supported in a pit 1201 dug in a brownfield site. An impermeable membrane 1202 is spread across the site to overlay contaminated soil; only a part of the membrane 1202 is shown in the Figure. In the bottom of the pit 1201, above the membrane 1202, three individual anchor units 110, e.g. of the type described above, are used spread around the tree as can be seen in Figure 12b, which is a schematic plan view from above (with soil removed). The arrangement is shown in a schematic side view in Figure 12a. The units 110 have the advantage that they can be nested for transport and have the cups in their surfaces which each support a frusum of top soil 1204 thereabove, each cup giving rigidity to the anchor unit 110 and each cup acting as a water reservoir. Whist the anchor units 110 each have interlocking features on their edges, as described above, so that they have the flexibility of being used in other configurations, as described below, the interlocking features are not needed in the arrangement illustrated in Figures 12a and 12b and variants of the anchor units 110 could be provided without any interlocking features along the side edges, but otherwise identical to the anchor units 110 described above, for use in anchoring apparatus arranged as illustrated in Figures 12a and 12b. The three anchor units 110 would be supplied in a kit for each tree, the kit also comprising three wire tendons 1205, 1206, 1207 and a strap 1208 which encircles the tree and impinges a top surface of the root ball 1209. The tendons 1205, 1206, 1207 are tensioned by a strap tensioner 1210. An irrigation system, comprising a porous conduit 1211 and a funnel 1212 for delivery of water to the conduit can be included in the kit, as is illustrated in Figure 12a.

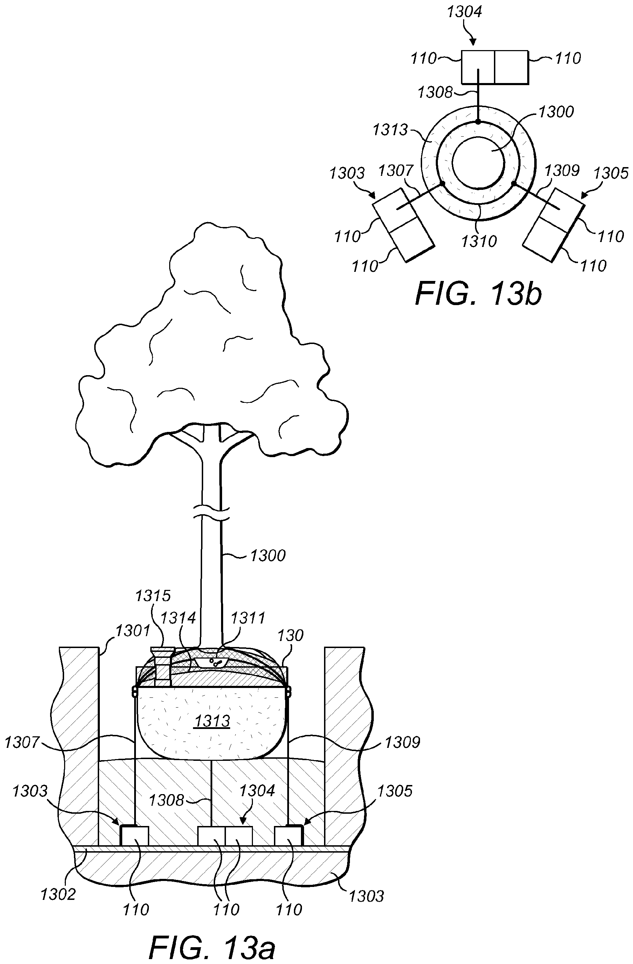

For larger trees such as tree 1300 in Figures 13a and 13b, the anchor units 110 can be used as illustrated in the Figures. In the Figure 13a the tree 1300 is planted in a pit 1301 dug in a brownfield site. A gas tight membrane, a part of which is shown as 1302 in Figure 13a, covers the contaminated subsoil 1303. The pit 1301 is dug in topsoil overlaying the membrane 1302. At the bottom of the pit 1301 are arranged three pairs 1303, 1304, 1305, of anchor units 110; each pair 1303, 1304, 1305 of anchor units 110 comprising two anchor units 110 interlocked together to act as a single unit and to share the loading thereon. Soil 1306 is compacted above the pairs 1303, 1304, 1305 of anchor units 110 and each pair provides a soil supporting surface with twice the area of the individual units used in the arrangement of Figures 12a and 12b, thus the arrangement of figures 13a, 13b is able to support greater loading than the arrangement of Figures 12a, 12b. Since each anchor unit 110 in the Figures 13a, 13b arrangement needs only to interlock with one other anchor unit, to form a pair, the interlocking features described above need be provided only on one side face of each anchor unit and not on all four faces, although providing the interlocking features on all four faces does provide flexibility of assembly as described below. The anchor units 110 will be provided as part of a kit comprising also comprising three wire tendons 1307, 1308 and 1309, a cable 1310, a cable tensioner 1311 and geotextile malting 1312. The malting 1312 is arranged on top of the root ball 1313 of the tree 1300. The cable 1310 is arranged on top of the malting 1312. The three tendons 1307, 1308, 1309 connect the pairs 1303, 1304, 1305 of anchor units 110 to the cable 1310. The tensioner 1311 is provided to tension the cable 1310 and thereby the tendons 1307, 1308, 1309. The kit can also comprise an irrigation system having a porous conduit 1314 and a funnel 1315 connected to the conduit to supply water to the conduit 1314.

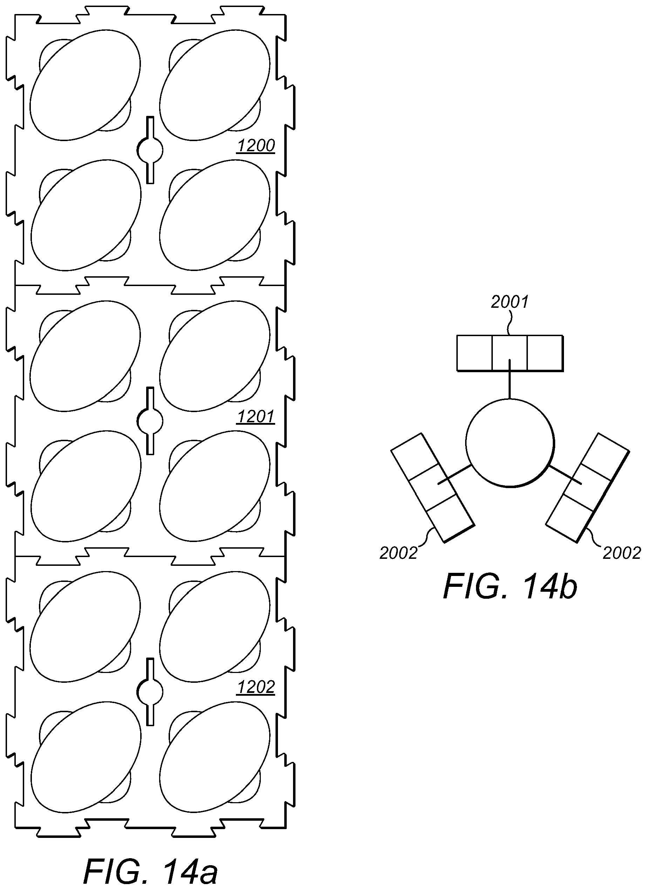

The anchor units 110 can be used interconnected in a line of three as shown in Figure 14a. If so used then they can be used as a straight replacement for the existing use of railways sleepers, kerb stones, paving edges. For example, a tree might require three sets 2000, 2001, 2002 of interconnected anchor units 110 spread around the tree as shown in Figure 12b.

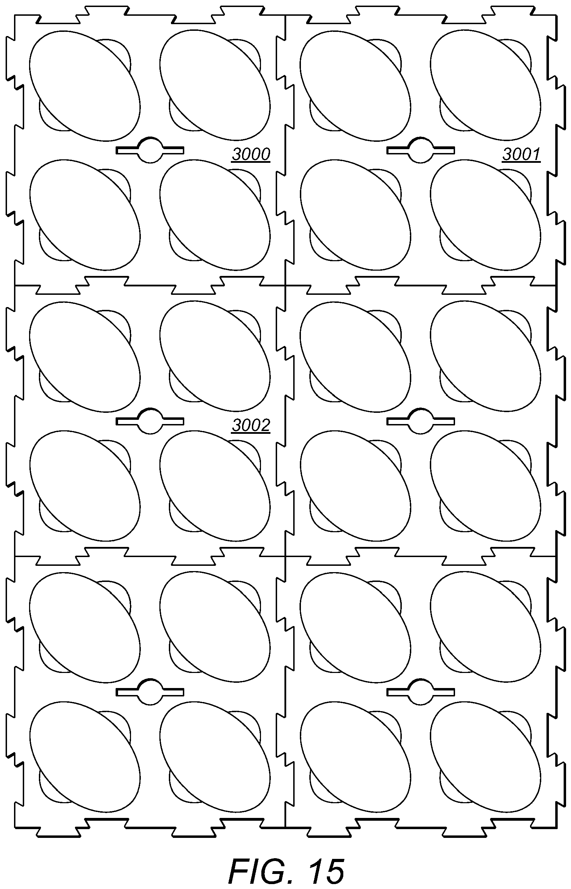

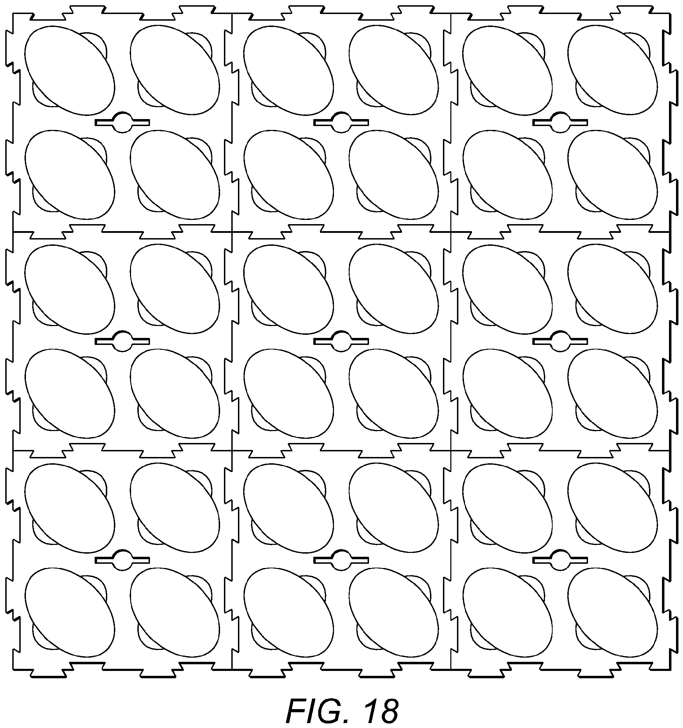

Alternatively a rectangular 3 by 2 array as shown in Figure 15 might be used to cover the base of a pot or of a pit, or a larger surface 3 by 3 array as shown in Figure 18 for a larger tree. Indeed the whole of the bottom of a pit or pot or planting area can be covered by an array of interlocked anchor units. The array could cover a large planting area for several trees, with flexibility of location provided by the fact that the anchor units each have an anchor point and so only selected ones of the anchor points can be used to suit the planting. An array of anchor units covering a planting area also provides an additionally useful barrier layer to prevent roots of the planted tree growing down below the barrier layer, e.g. to prevent damage to services such as water pipes or gas pipes or sewer pipes.

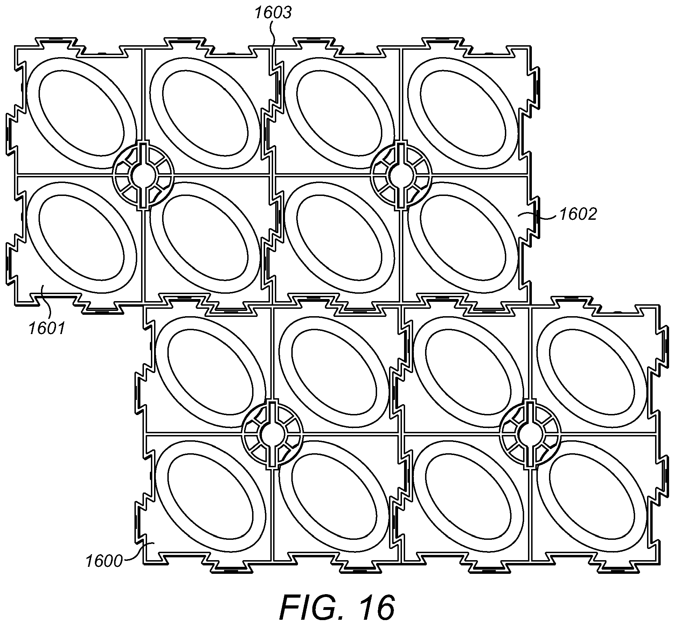

Multiple different arrays are possible and a square 2 by 2 array is shown in Figure 17. It is also possible, as shown in Figure 16, for a single anchor unit 1600 to be interlocked with two abutting anchor units 1601, 1602, spanning the interface 1603 between the two anchor units 1601, 1602. This may lead to more secure interlocking of the anchor units.

As shown in Figure 17, an array of four anchor units 110a, 110b, 110c, 110d are arranged in a two by two grid to provide tree anchoring apparatus 100. The anchor units 110 of the preferred embodiment are interconnected using dovetail joints formed from interlocking pins 270, and tails 275, provided along each side face of the planar layers 102 of the anchor units, with the dovetail joints formed between adjacent units 100 by inserting the pins 270 in the tails 275. The pins 270 and tails 275 have matching trapezoidal shapes.

As can be seen from Figures 12a to 18, owing to the shape of the pin and tails, when the dovetail joints are formed between anchor units 110, then relative motion of one anchor unit 110 relative to the other(s) with which it is interconnected is prevented.

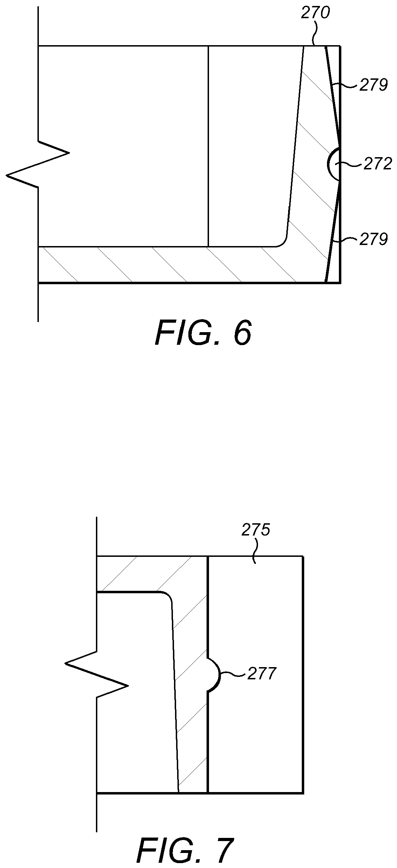

To further secure adjacent units 100 together niches and tabs 272, 277 are provided on and in the tails 275 and pins 270, as best shown in Figures 6 and 7. Niche 272 is provided in a face of a pin 270. Tab 277 is provided on a face of a tail 275, the tab 277 having a shape complementary to the niche 272.

As can be seen in Figure 3, a channel 273 is provided in the face of pin for guiding the tab 271 to the niche 272. Preferably, the channel 273 extends across the face of the pin 270 to terminate in openings on opposed the upper and lower surfaces of the pin 270.

Preferably, the channel 278 has a sloped or ramped surface 279 so that the depth of the channel decreases towards the mid point of the channel 278, i.e. towards the niche 272. Thus the tab 271 may be slid into the channel 278 from either side initially with relatively low resistance but with an increasing force in order to reach the niche 272, with some elastic deformation of the tab 277 and/or the surface of the channel 278 needed. This provides a reliable interlock.

As mentioned about and as shown in Figures 12a to 16 an array of anchor units 110 may be interlocked to form anchoring apparatus 100 of a desired size and shape. For instance Figure 12a shows three anchor units connected in a line and this mimics the shape of a railway sleeper and provides an immediate substitute. However, the present invention allows the assembly of arrays of different sizes, e.g. to cover the whole of the base of a planting pot or planting area; this can be advantageous since the cups in the anchor unit act to capture water and store it for watering the tree anchored by the anchoring apparatus. Additionally the larger the surface area provided by the interlockable anchor units, the greater the force can be resisted by the anchoring apparatus. Once the anchor units are interlockable together they together form a rigid member and jointly react loading thereon.

Figure 12a shows that the pins and tails located along only one edge of an anchor unit 1200 are interlocked with the pins and tails of a single abutting anchor unit 1201.

Figure 13 shows that the pins and tails of two edges of an anchor unit 3000 interlock with a pin and tail of a first anchor unit 3001 and with a pin and tail of an edge of a second anchor unit 3002.

A preferred configuration of anchor point 250 for an anchor unit is shown in Figure 2. The anchor point 250 comprises a slot 251 with a widened central circular operation. Reinforcing ribs 252 surround the anchor point on the rear side of the upper layer 240 (See Figure 9). Preferably, the ribs extend radially from the widened section of the slot.

A strap or cable 1600 may be attached to the anchor point 250 using a disc 1601, as shown in Figures 18a to 18d. As shown in Figure 18a, the disc 1601 comprises a plate 320 having an eye 1602 formed therein. The eye 1602 is central to the plate 320. The strap or cable 1600 is attached to the eye 1601 by a method as illustrated in Figures 18b to 18d. During assembly, the disc 1601 is oriented to pass through the slot of anchor point 250, as illustrated in Figure 16b, the disc 1601 passing through the slot, with the eye 1602 and the end of the attached strap or cable passing through the widened central section of the slot. The disc 300 is then rotated as shown in Figure 18c and then brought into abutment with the underside of the planar layer 102 as shown in Figure 16d, with the strap or cable extending from the disc 1601 through the slot.

Preferably, the disc 1601 and eye 1602 are integrally formed, e.g. by stamping a planar member to form the eye 1602.

Raised ribs 900 can be formed on the lower part of planar layer 240 between the cups 210 to enhance the rigidity of the tray 200, as seen in Figure 9.

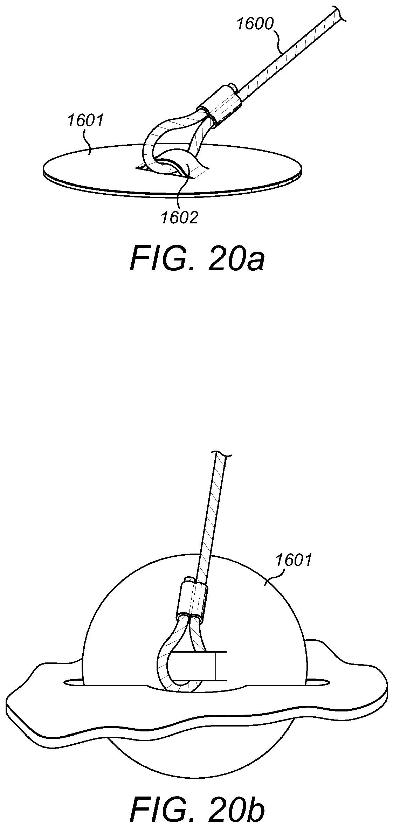

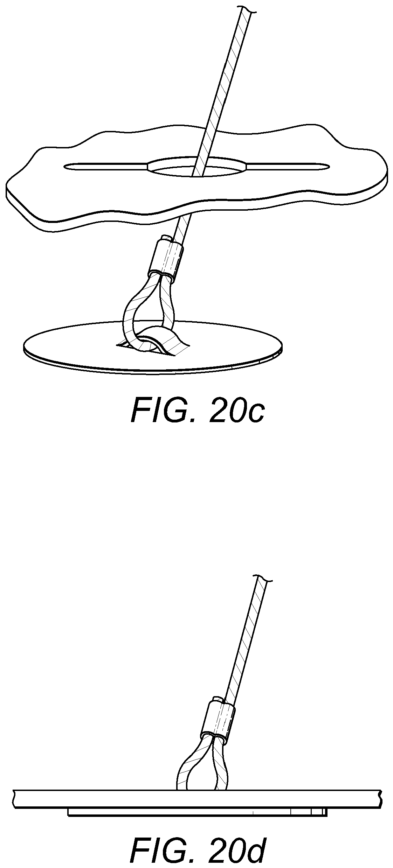

In a modification of the anchor unit of Figures 2 to 9, illustrated in Figure 20, a bead 5000 is provided which extends around the entire periphery of the top support surface 140. The rounded upper surface of the bead 5000 assists the guiding of the pins into the tails in the interlocking process, by removing abrupt edges from the anchor units.

Although reference is made throughout this specification and the claims to use of the anchoring apparatus for anchoring trees, the apparatus is of equal use for anchoring bushes and other plants which have a significant root ball.

## Claims

1. Tree anchoring apparatus comprising:
a plurality of interlocking anchor units (110), each anchor unit (110) having connection means (270, 275) allowing the anchor unit (110) to be secured to at least one adjacent anchor unit (110);
an anchoring point (150) provided for each anchor unit (110); and
a cable or strap (10, 20) securable to at least one of the anchoring points (150), wherein:
the plurality of interlocking anchor units (110) are transportable disengaged from one another and can be interlocked with each other in situ to jointly provide a surface for supporting an overburden of soil;
the cable or strap (10, 20) can be used to secure the interlocked anchor
units (110) to a root ball of a tree located there above,
**characterised in that** each anchor unit (110) has a periphery which is generally polygonal when viewed in a top plan view, and a plurality of side faces of the polygonal periphery are each provided with connection means (270, 275) to enable the anchor unit (110) to be connected to a neighbouring anchor unit (110).

2. Tree anchoring apparatus as claimed in claim 1 wherein the connection means (270, 275) of each anchor unit (110) allows the anchor units (110) to be secured to a plurality of adjacent anchor units (110).

3. Tree anchoring apparatus as claimed in claims 1 or 2 wherein each anchoring point (150) comprising a slot (250) extending from an opening in the soil supporting surface through the anchor unit (110) to an opening in an under surface of the anchor unit (110).

4. Tree anchoring apparatus as claimed in any of claims 1 to 3 wherein the anchor units (110) are stackable for transport.

5. Tree anchoring apparatus as claimed in claim 4 where the anchor units (110) are provided with co-operating features (210, 225) which allow a pair of anchor units (110) to be stacked with their upper surfaces (140) spaced apart by a first distance when the anchor units (110) are stacked in a first orientation relative to each other and which allow the pair of anchor units (110) to be stacked with their upper surfaces (140) spaced apart by a second distance greater than the first distance when the anchor units (110) are stacked in a second orientation relative to each other.

6. Tree anchoring apparatus as claimed in claim 4 wherein each anchor unit (110) is provided with a planar layer providing a planar upper surface (140) and at least one cup (210) which has a mouth formed in the planar upper surface (140) and which extends away from the upper surface (140) with a side wall which extends from the planar layer to a base of the cup (210); and when the pair of anchor units (110) are stacked in the first orientation the cup(s) (210) of one of the anchor units (110) are inserted into the cup(s) (210) of an other anchor units (110) located therebeneath.

7. Tree anchoring apparatus as claimed in claim 6 wherein the planar upper surface (140) of each anchor unit (110) is provided with at least one recess (105) and when the pair of anchor units (110) are stacked in the second orientation the then base(s) of the cup(s) (210) of one anchor unit (110) are inserted into the recess(es) (105) of the other anchor unit (110).

8. Tree anchoring apparatus as claimed in claim 1 wherein each of the plurality of side faces is provided with connecting means comprising of at least one pin (270) extending from the side face anchor units (110) and a recess (105) provided in the side face.

9. Tree anchoring apparatus as claimed in claim 8 having a first anchor unit (110) and a second anchor unit (110) wherein the connecting means of the first anchor unit (110) can form a dovetail joint with the second anchor unit (110) and the pin (270) is of trapezoidal shape and the recess (105) is a matching trapezoidal recess (105).

10. Tree anchoring apparatus as claimed in claim 9 wherein one of the pin (270) and the recess (105) has a tab (277) extending from a face thereof and the other of the pin (270) and the recess (105) has a niche formed in a face thereof.

11. Tree anchoring apparatus as claimed in claim 10 wherein the face with the niche (272) has a ramped portion leading to the niche (272).

12. A tree anchoring kit comprising:
the tree anchoring apparatus of anyone of claims 1 to 11; and
a plurality of cables or straps (10, 20), with each cable or strap (10, 20) having a disc (1601) secured at an end thereof, the disc (1601) being insertable through the slot (250) of an anchor unit (110) in a first orientation and then rotable to in a second orientation in which the disc (1601) can engage the upper surface (140) of the anchor unit (110).

13. A method of anchoring a tree using either the tree anchoring apparatus of claims 1 to 11 or the tree anchoring kit according to claim 12, the method comprising:
transporting to a planting site of the tree the plurality of anchor units (110), each anchor unit (110) having connection means (270, 275) allowing the anchor unit (110) to be secured to a plurality of adjacent anchor units (110);
interlocking the plurality of anchor units (110) together to provide a surface for supporting an overburden of soil;
securing a root ball of the tree to the plurality of interlocked anchor units (110) using a cable or strap (10, 20) which is attached to one or more anchoring points (150) provided by interlocked anchor units (110); and
covering the root ball and the plurality of anchor units (110) with soil, with the interlocked anchor units (110) buried beneath the root ball and an overburden of soil on top of the interlocked anchor units (110), wherein the anchor units (110) are interlocked with each other such than an upward force applied to one anchor unit (110) is transmitted to all of the anchor units (110) interlocked therewith.

14. A method as claimed in claim 13 in which:
anchor units (110) are used which when aligned in a first orientation relative to each other are stackable with the soil supporting surfaces thereof spaced by a first distance and when aligned in a second orientation are stackable with the soil supporting surfaces thereof spaced by a second distance larger than the first distance; and
for transportation the plurality of anchor units (110) are all stacked in the first orientation relative to each other.

## Patentansprüche

1. Baumverankerungsvorrichtung, umfassend:
eine Mehrzahl von ineinandergreifenden Verankerungseinheiten (110), wobei jede Verankerungseinheit (110) Verbindungsmittel (270, 275) aufweist, die es ermöglichen, die Verankerungseinheit (110) an mindestens einer benachbarten Verankerungseinheit (110) zu befestigen;
einen Verankerungspunkt (150), der für jede Verankerungseinheit (110) vorgesehen ist; und
ein Kabel oder Band (10, 20), das an mindestens einem der Verankerungspunkte (150) befestigt werden kann,
wobei:
die Mehrzahl von ineinandergreifenden Verankerungseinheiten (110) voneinander getrennt transportierbar sind und in situ miteinander verriegelbar sind, um gemeinsam eine Fläche zum Tragen einer Bodendeckschicht bereitzustellen;
das Kabel oder Band (10, 20) verwendbar ist, um die verriegelten Verankerungseinheiten (110) an einem Wurzelballen eines darüber befindlichen Baumes zu befestigen,
**dadurch gekennzeichnet, dass** jede Verankerungseinheit (110) einen Umfang aufweist, der in einer Draufsicht im Allgemeinen polygonal ist, und eine Vielzahl von Seitenflächen des polygonalen Umfangs jeweils mit Verbindungsmitteln (270, 275) versehen sind, um eine Verbindung der Verankerungseinheit (110) mit einer benachbarten Verankerungseinheit (110) zu ermöglichen.

2. Baumverankerungsvorrichtung nach Anspruch 1, bei der die Verbindungsmittel (270, 275) jeder Verankerungseinheit (110) es ermöglichen, die Verankerungseinheiten (110) an einer Mehrzahl von benachbarten Verankerungseinheiten (110) zu sichern.

3. Baumverankerungsvorrichtung nach Anspruch 1 oder 2, bei der jeder Verankerungspunkt (150) einen Schlitz (250) aufweist, der sich von einer Öffnung in der den Boden tragenden Fläche durch die Verankerungseinheit (110) zu einer Öffnung in einer Unterseite der Verankerungseinheit (110) erstreckt.

4. Baumverankerungsvorrichtung nach einem der Ansprüche 1 bis 3, bei der die Verankerungseinheiten (110) zum Transport stapelbar sind.

5. Baumverankerungsvorrichtung nach Anspruch 4, bei der die Verankerungseinheiten (110) mit zusammenwirkenden Merkmalen (210, 225) versehen sind, die es ermöglichen, ein Paar Verankerungseinheiten (110) so zu stapeln, dass ihre oberen Oberflächen (140) um einen ersten Abstand voneinander beabstandet sind, wenn die Verankerungseinheiten (110) in einer ersten Orientierung relativ zueinander gestapelt werden, und die es ermöglichen, das Paar Verankerungseinheiten (110) mit ihren oberen Oberflächen (140) um einen zweiten Abstand voneinander beabstandet zu stapeln, der größer als der erste Abstand ist, wenn die Verankerungseinheiten (110) in einer zweiten Orientierung relativ zueinander gestapelt werden.

6. Baumverankerungsvorrichtung nach Anspruch 4, bei der jede Verankerungseinheit (110) mit einer planaren Schicht, die eine planare Oberseite (140) bereitstellt, und mindestens einer Schale (210) versehen ist, die eine in der planaren Oberseite (140) ausgebildete Mündung aufweist und die sich von der Oberseite (140) mit einer Seitenwand, die sich von der planaren Schicht bis zu einer Basis der Schale (210) erstreckt, weg erstreckt; wobei wenn das Paar Verankerungseinheiten (110) in der ersten Ausrichtung gestapelt ist, die Schale(n) (210) einer der Verankerungseinheiten (110) in die Schale(n) (210) einer anderen Verankerungseinheit (110) eingesetzt sind, die sich darunter befindet.

7. Baumverankerungsvorrichtung nach Anspruch 6, bei der die planare Oberseite (140) jeder Verankerungseinheit (110) mit mindestens einer Aussparung (105) versehen ist und, wenn das Paar Verankerungseinheiten (110) in der zweiten Ausrichtung gestapelt ist, das, was dann die Basis/Basen der Schale(n) (210) einer Verankerungseinheit (110) ist/sind, in die Aussparung(en) (105) der anderen Verankerungseinheit (110) eingesetzt ist/sind.

8. Baumverankerungsvorrichtung nach Anspruch 1, bei der jede der Mehrzahl von Seitenflächen mit Verbindungsmitteln versehen ist, die mindestens einen Stift (270), der sich von den Verankerungseinheiten (110) der Seitenflächen erstreckt, und eine in der Seitenfläche vorgesehene Ausnehmung (105) umfassen.

9. Baumverankerungsvorrichtung nach Anspruch 8 mit einer ersten Verankerungseinheit (110) und einer zweiten Verankerungseinheit (110), wobei die Verbindungsmittel der ersten Verankerungseinheit (110) mit der zweiten Verankerungseinheit (110) eine Schwalbenschwanzverbindung bilden können und der Stift (270) trapezförmig ist und die Aussparung (105) eine passende trapezförmige Aussparung (105) ist.

10. Baumverankerungsvorrichtung nach Anspruch 9, bei der von Stift (270) und Aussparung (105) eines eine Lasche (277) aufweist, die sich von einer Seite desselben erstreckt, und das andere von Stift (270) und Aussparung (105) eine Nische aufweist, die in einer Seite derselben ausgebildet ist.

11. Baumverankerungsvorrichtung nach Anspruch 10, bei der die Fläche mit der Nische (272) einen rampenförmigen Abschnitt aufweist, der zu der Nische (272) führt.

12. Baumverankerungskit, umfassend:
die Baumverankerungsvorrichtung nach einem beliebigen der Ansprüche 1 bis 11; und
eine Mehrzahl von Kabeln oder Bändern (10, 20), wobei jedes Kabel oder Band (10 20) eine an einem Ende davon befestigte Scheibe (1601) aufweist, wobei die Scheibe (1601) durch den Schlitz (250) einer Verankerungseinheit (110) in einer ersten Ausrichtung einsetzbar ist und dann in eine zweite Ausrichtung drehbar ist, in der die Scheibe (1601) in die obere Fläche (140) der Verankerungseinheit (110) eingreifen kann.

13. Verfahren zum Verankern eines Baumes unter Verwendung der Baumverankerungsvorrichtung nach den Ansprüchen 1 bis 11 oder des Baumverankerungskits nach Anspruch 12,
wobei das Verfahren umfasst:
Transportieren der Mehrzahl von Verankerungseinheiten (110) zu einer Pflanzstätte des Baumes, wobei jede Verankerungseinheit (110) Verbindungsmittel (270, 275) aufweist, die es ermöglichen, die Verankerungseinheit (110) an einer Mehrzahl von benachbarten Verankerungseinheiten (110) zu befestigen;
Verriegeln der Mehrzahl von Verankerungseinheiten (110) miteinander, um eine Oberfläche zum Tragen einer Bodendeckschicht zu schaffen;
Sichern eines Wurzelballens des Baumes an der Mehrzahl von verriegelten Verankerungseinheiten (110) unter Verwendung eines Kabels oder Bandes (10, 20), das an einem oder mehreren Verankerungspunkten (150) befestigt ist, die durch verriegelte Verankerungseinheiten (110) bereitgestellt sind; und
Bedecken des Wurzelballens und der Mehrzahl von Verankerungseinheiten (110) mit Erde, wobei die verriegelten Verankerungseinheiten (110) unter dem Wurzelballen und einer Bodendeckschicht auf der Oberseite der verriegelten Verankerungseinheiten (110) vergraben werden,
wobei die Verankerungseinheiten (110) so miteinander verriegelt werden, dass eine auf eine Verankerungseinheit (110) ausgeübte Aufwärtskraft auf alle damit verriegelten Verankerungseinheiten (110) übertragen wird.

14. Verfahren nach Anspruch 13, bei dem:
Verankerungseinheiten (110) verwendet werden, die, wenn sie in einer ersten Ausrichtung relativ zueinander ausgerichtet sind, stapelbar sind, wobei ihre Bodenstützflächen um einen ersten Abstand voneinander beabstandet sind, und wenn sie in einer zweiten Ausrichtung ausgerichtet sind, stapelbar sind, wobei ihre Bodenstützflächen um einen zweiten Abstand, der größer als der erste Abstand ist, beabstandet sind; und
zum Transportieren die Mehrzahl von Verankerungseinheiten (110) alle in der ersten Ausrichtung relativ zueinander gestapelt sind.

## Revendications

1. Appareil d'ancrage d'arbre comprenant :
une pluralité d'unités d'ancrage de verrouillage (110), chaque unité d'ancrage (110) ayant des moyens de raccordement (270, 275) permettant à l'unité d'ancrage (110) d'être fixée à au moins une unité d'ancrage (110) adjacente ;
un point d'ancrage (150) prévu pour chaque unité d'ancrage (110) ; et
un câble ou sangle (10, 20) pouvant être fixé(e) sur au moins l'un des points d'ancrage (150), dans lequel :
la pluralité d'unités d'ancrage de verrouillage (110) peuvent être transportées, dégagées les unes des autres et peuvent être verrouillées entre elles in situ pour fournir conjointement une surface pour supporter un mort-terrain de terre ;
le câble ou sangle (10, 20) peut être utilisé (e) pour fixer les unités d'ancrage verrouillées (110) sur un pain racinaire d'un arbre positionné au-dessus,
**caractérisé en ce que** chaque unité d'ancrage (110) a une périphérie qui est généralement polygonale lorsqu'elle est observée sur une vue en plan de dessus, et une pluralité de faces latérales de la périphérie polygonale sont chacune prévues avec des moyens de raccordement (270, 275) pour permettre à l'unité d'ancrage (110) d'être raccordée à une unité d'ancrage voisine (110).

2. Appareil d'ancrage d'arbre selon la revendication 1, dans lequel le moyen de raccordement (270, 275) de chaque unité d'ancrage (110) permet aux unités d'ancrage (110) d'être fixées à une pluralité d'unités d'ancrage (110) adjacentes.

3. Appareil d'ancrage d'arbre selon les revendications 1 ou 2, dans lequel chaque point d'ancrage (150) comprend une fente (250) s'étendant à partir d'une ouverture dans la surface de support de terre en passant par l'unité d'ancrage (110) jusqu'à une ouverture dans une surface sous-jacente de l'unité d'ancrage (110).

4. Appareil d'ancrage d'arbre selon l'une quelconque des revendications 1 à 3, dans lequel les unités d'ancrage (110) peuvent être empilées pour le transport.

5. Appareil d'ancrage d'arbre selon la revendication 4, dans lequel les unités d'ancrage (110) sont prévues avec des caractéristiques coopératives (210, 225) qui permettent à une paire d'unités d'ancrage (110) d'être empilées avec leurs surfaces supérieures (140) espacées par une première distance lorsque les unités d'ancrage (110) sont empilées dans une première orientation les unes par rapport aux autres et qui permettent à la paire d'unités d'ancrage (110) d'être empilées avec leurs surfaces supérieures (140) espacées par une seconde distance supérieure à la première distance lorsque les unités d'ancrage (110) sont empilées dans une seconde orientation les unes par rapport aux autres.

6. Appareil d'ancrage d'arbre selon la revendication 4, dans lequel chaque unité d'ancrage (110) est prévue avec une couche planaire fournissant une surface supérieure planaire (140) et au moins une coupelle (210) qui a une bouche formée dans la surface supérieure planaire (140) et qui s'étend à distance de la surface supérieure (140) avec une paroi latérale qui s'étend à partir de la couche planaire jusqu'à une base de la coupelle (210) ; et lorsque la paire d'unités d'ancrage (110) est empilée dans la première orientation, la (les) coupelle(s) (210) de l'une des unités d'ancrage (110) est (sont) insérée(s) dans la (les) coupelle (s) (210) d'une autre unité d'ancrage (110) située au-dessous.

7. Appareil d'ancrage d'arbre selon la revendication 6, dans lequel la surface supérieure planaire (140) de chaque unité d'ancrage (110) est prévue avec au moins un évidement (105) et lorsque la paire d'unités d'ancrage (110) est empilée dans la seconde orientation, alors la (les) base (s) de la (des) coupelle(s) (210) d'une unité d'ancrage (110) est (sont) insérée(s) dans l'évidement (les évidements) (105) de l'autre unité d'ancrage (110).

8. Appareil d'ancrage d'arbre selon la revendication 1, dans lequel chacune de la pluralité de faces latérales est prévue avec un moyen de raccordement comprenant au moins une broche (270) s'étendant à partir des unités d'ancrage de face latérale (110) et un évidement (105) prévu dans la face latérale.

9. Appareil d'ancrage d'arbre selon la revendication 8, ayant une première unité d'ancrage (110) et une seconde unité d'ancrage (110), dans lequel le moyen de raccordement de la première unité d'ancrage (110) peut former un joint en queue d'aronde avec la seconde unité d'ancrage (110) et la broche (270) est de forme trapézoïdale et l'évidement (105) est un évidement trapézoïdal (105) correspondant.

10. Appareil d'ancrage d'arbre selon la revendication 9, dans lequel l'un parmi la broche (270) et l'évidement (105) a une languette (277) s'étendant à partir de sa face et l'autre parmi la broche (270) et l'évidement (105) a une niche formée dans sa face.

11. Appareil d'ancrage d'arbre selon la revendication 10, dans lequel la face avec la niche (272) a une partie à rampe menant à la niche (272).

12. Kit d'ancrage d'arbre comprenant :
l'appareil d'ancrage d'arbre selon l'une quelconque des revendications 1 à 11 ; et
une pluralité de câbles ou de sangles (10, 20), avec chaque câble ou sangle (10, 20) qui a un disque (1601) fixé au niveau de son extrémité, le disque (1601) pouvant être inséré à travers la fente (250) d'une unité d'ancrage (110) dans une première orientation et ensuite pouvant tourner dans une seconde orientation dans laquelle le disque (1601) peut mettre en prise la surface supérieure (140) de l'unité d'ancrage (110).

13. Procédé pour ancrer un arbre à l'aide de l'appareil d'ancrage d'arbre selon les revendications 1 à 11 ou du kit d'ancrage d'arbre selon la revendication 12, le procédé comprenant les étapes consistant à :
transporter sur un site de plantation de l'arbre, la pluralité d'unités d'ancrage (110), chaque unité d'ancrage (110) ayant un moyen de raccordement (270, 275) permettant à l'unité d'ancrage (110) d'être fixée sur une pluralité d'unités d'ancrage (110) adjacentes ;
verrouiller la pluralité d'unités d'ancrage (110) ensemble pour fournir une surface pour supporter un mort-terrain de terre ;
fixer un pain racinaire de l'arbre à la pluralité d'unités d'ancrage verrouillées (110) à l'aide d'un câble ou d'une sangle (10, 20) qui est fixé(e) à un ou plusieurs points d'ancrage (150) fournis par des unités d'ancrage verrouillées (110) ;
recouvrir le pain racinaire et la pluralité d'unités d'ancrage (110) avec de la terre, avec les unités d'ancrage verrouillées (110) enterrées au-dessous du pain racinaire et d'un mort-terrain de terre sur le dessus des unités d'ancrage verrouillées (110),
dans lequel les unités d'ancrage (110) sont verrouillées entre elles de sorte qu'une force ascendante appliquée sur une unité d'ancrage (110) est transmise à toutes les unités d'ancrage (110) verrouillées.

14. Procédé selon la revendication 13, dans lequel :
les unités d'ancrage (110) qui sont utilisées, lorsqu'elles sont alignées dans une première orientation les unes par rapport aux autres, peuvent être empilées avec leurs surfaces de support de terre espacées par une première distance et lorsqu'elles sont alignées dans une seconde orientation, peuvent être empilées avec leurs surfaces de support de terre espacées par une seconde distance supérieure à la première distance ; et
pour le transport, la pluralité d'unités d'ancrage (110) sont toutes empilées dans la première orientation, les unes par rapport aux autres.
